# EUROPEAN PATENT SPECIFICATION

(11) **EP 2 215 795 B1**
(45) Date of publication and mention of the grant of the patent: **07.12.2016**
(21) Application number: 08844959.0
(22) Date of filing: 29.10.2008
(51) Int. Cl.: H04L 29/06, H04L 9/08, H04L 9/14

(54) **END-TO-END ENCRYPTED COMMUNICATION**
VERSCHLÜSSELTE END-ZU-END KOMMUNIKATION
COMMUNICATION CRYPTÉE DE BOUT EN BOUT

(30) Priority: 31.10.2007 FI 20075776
(43) Date of publication of application: 11.08.2010
(73) Proprietor: Airbus Defence and Space Oy, 00380 Helsinki (FI)
(72) Inventor: KAUHANEN, Lari-Mikko, FI-40520 Jyväskylä (FI); TAMMIO, Matti, FI-40270 Palokka (FI)
(74) Representative: Kolster Oy Ab
(86) International application number: PCT/FI2008/050608
(87) International publication number: WO 2009/056679

(56) References cited:
- EP-A- 1 826 984
- US-A1- 2005 152 305

## Description

### FIELD OF THE INVENTION

The present invention relates to communications, and particularly to end-to-end encrypted communication.

### BACKGROUND OF THE INVENTION

In advanced networks that offer communication features necessary for modern demanding users, the costs of investment and maintenance easily become very high. This is overcome by use of shared resources. In public networks users subscribed to it inherently share the available network resources. An operator sets up a network and subscribers pay back the investment and compensate for maintenance costs by settling their monthly bills.

In professional systems networks have traditionally been private, but a sensible trend of recent years has been towards shared networks. There already exist some technologies where an operator may set up the network and runs it, and user organizations are provided with a contracted communication resource that they may utilize without, however, compromising the privacy of the communications between the members of their organizations. The organizations pay for their acquired communication resource according to a contract with the operator. An example of such systems is TETRA (Terrestrial trunked Radio), specified by the European Telecommunications Standards Institute (ETSI).

In addition to the protective measures offered by the applied network technology, some private or professional users are interested in adding one more level of security to their communications. End-to-end encryption is a mechanism that provides continuous protection of the confidentiality and integrity of transmitted information by encrypting it at the origin and decrypting it at its destination. In any of the intermediate stages the information is available only in encrypted form and therefore it is possible for one communication endpoint to send information to another communication endpoint without any element in the middle of the message flow being able to access it.

The basic principle in end-to-end communication is that between the endpoints there exists a shared secret using which the information can be protected in the transmitting end and the protection revoked in the receiving end. Typically this is implemented by use of a defined encryption algorithm in the transmitting endpoint and a corresponding decryption algorithm in the receiving endpoint, and shared knowledge on a secret cipherkey. The essential requirement, however, is then that both endpoints apply the same secret, for example the same key or keypair is in use in both ends. Typically the end-to-end encryption keys are changed, in order to avoid the possibility that a third party could determine the code by intercepting transmitted messages.

Key management refers to operations for generation, storage, distribution, deletion, archiving and application of keys in accordance with a security policy. When end-to-end encryption keys are changed dynamically, key management becomes a problem. Typically the knowledge on the current status and parameter settings controlling the operations is maintained in the network, i.e. is under the control of the network operator. On the other hand, the management of the end-to-end encryption keys is under the control of the communicating parties, or the organization they belong to. When these two parties do not have direct access to each other's procedures it is possible, that the knowledge on the change in the end-to-end encryption keys is not simultaneously available to all communicating parties. On the other hand, a change cannot be effected before all parties are aware that a change is due. For example, a user may have switched off his terminal, or he may have his terminal switched on but is not near enough or otherwise able to operate the terminal to confirm the change or the user may be in an area that is out of coverage. In any of these cases the operations related to the change become complicated, timely unpredictable or may involve considerably more communications to be effected. In the worst case, lives may be lost because rescuing personnel assumed to operate together are not able to communicate with each other.

EP1826984 discloses a method for encrypted communication within a group of communication devices. The method includes a step of distributing key information, having a limited validity time, to the communication devices within the group.

### SUMMARY OF THE INVENTION

An object of the present invention is thus to provide a method and an apparatus for implementing the method so as to overcome at least some of the above problems. The objects of the invention are achieved by a method and an arrangement, which are characterized by what is stated in the independent claims. The preferred embodiments of the invention are disclosed in the dependent claims.

The invention is based on the idea of associating end-to-end encryption keys with a validity indication that indicates a cryptographic group in which the key is to be applied, and a period during which the key is applicable in that particular cryptographic group. The cryptographic group may correspond to a group of two user terminals for an individual call, or to one or more talk groups applying the same end-to-end encryption key.

Due to this, management of end-to-end encryption keys becomes easier and more predictable, and safety of operations relying on the communication is improved.

### BRIEF DESCRIPTION OF THE DRAWINGS

In the following the invention will be described in greater detail by means of preferred embodiments with reference to the attached drawings, in which
Figure 1 illustrates main elements of an embodied TETRA radio system;
Figure 2 shows a reference hardware configuration of a KMC element;
Figure 3 shows a reference hardware configuration of a mobile station;
Figure 4 illustrates an embodiment of an end-to-end encryption process applicable in the embodied TETRA system;
Figure 5A illustrates a plurality of talk groups TG1 to TG8;
Figure 5B shows division of talk groups into user groups and cryptographic groups;
Figure 6 illustrates a record stored into the security module of the mobile station embodied in Figure 3;
Figure 7 illustrates an exemplary procedure for implementing end-to-end encryption in the context of the embodied mobile station of Figure 3; and
Figure 8 illustrates an exemplary procedure for implementing end-to-end encryption in the context of the embodied KMC element of Figure 2.

### DETAILED DESCRIPTION OF THE INVENTION

The following embodiments are exemplary implementations of the present invention. Although the specification may refer to "an", "one", or "some" embodiment(s), reference is not necessarily made to the same embodiment(s), and/or a feature does not apply to a single embodiment only. Single features of different embodiments of this specification may be combined to provide further embodiments.

In the following, the invention is described using the terms and elements of the TETRA system as specified in the European Telecommunication Standards ETSI EN 300 392-2; European Standard (Telecommunications series); Terrestrial Trunked Radio (TETRA); Voice plus Data (V+D); Part 2: Air Interface (AI), and ETSI EN 300 392-7; European Standard (Telecommunications series); Terrestrial Trunked Radio (TETRA); Voice plus Data (V+D); Part 7: Security, and Terrestrial Trunked Radio (TETRA); Security; Synchronization mechanism for end-to-end encryption, however without limiting the invention to this one radio system technology. The present invention can be applied to any communication system, where end-to-end encryption between two or more communicating parties is provided.

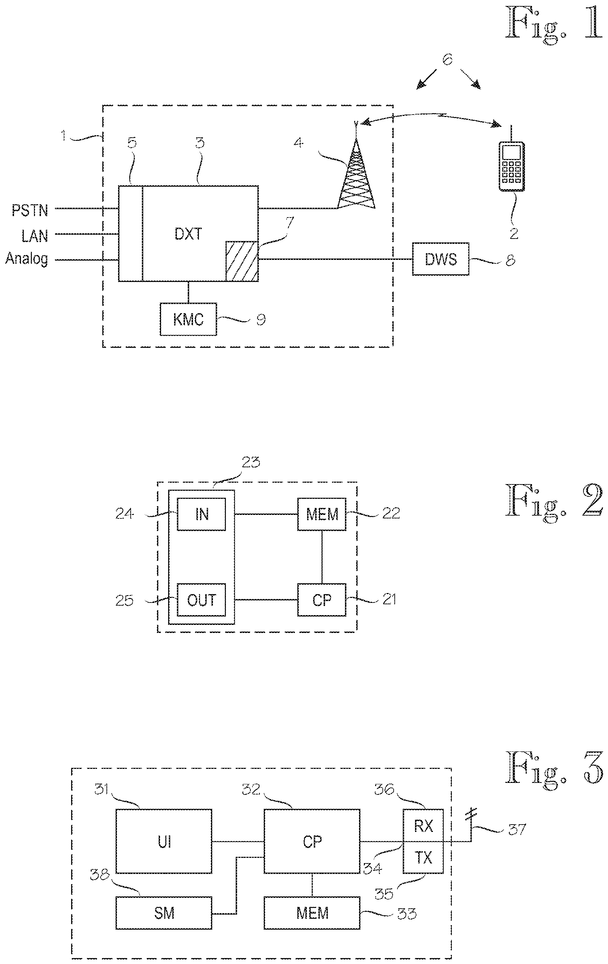

Figure 1 shows a simplified illustration of the main elements of an embodied TETRA radio system. TETRA is a mobile radio system that comprises at least a switching and management infrastructure (SwMI) 1 and a mobile station (MS) 2. SwMI 1 is equipment for a voice plus data (V+D) network, which enables the subscriber terminals to communicate with each other. In Figure 1, SwMI comprises one digital exchange (DXT) 3 and one base station (TBS) 4, but naturally the type and number of elements and their interconnections can vary according to the specific system and implementation. Thus, the type and number of units that constitute SwMI are not essential to the invention as such.

An interface block 5 denotes the various interfaces of the digital exchange. These facilitate connections between the mobile stations and for example the internal or external data networks, other analog or digital mobile systems, public switched telephone network, and the like.

Of the subscriber terminals, the mobile station (MS) 2 is arranged to access SwMI via an air interface 6. In addition to this, in TETRA systems there may also be provided a dispatching system for facilitating the dispatching communication. The dispatching system is typically a combination of dispatcher station controllers 7 and one or more dispatching workstations 8, or a system of servers and workstations connected therewith. The dispatching system communicates with SwMI using a suitable network protocol, for example E1, ISDN-BA, or IP. The dispatching workstation 8 can communicate with the other subscribers of the network and/or manage system, subscriber, group and/or organisation-specific parameters of the radio system. In some systems, all or part of this subscriber management functionality can be in the network management system.

The system may also comprise a key management centre (KMC) 9 that manages cryptographic keys of at least some of the subscribers of the system. KMC may be a single network element or a combination of elements. In Figure 1 KMC is shown directly connected to DXT, but any applicable protocol, including E1, ISDN-BA, or IP may be applied for the connection. It is also clear, however, that for a mere provision of end-to-end encryption keys, KMC does not need to be continuously connected to SwMI at all.

The block diagram in Figure 2 shows a reference hardware configuration of a KMC element 9 according to the present embodiment of the invention. The element comprises a processing unit 21, an element that comprises an arithmetic logic function; a number of special registers and control circuits. Connected to the processing unit is a memory unit 22, a data medium where computer-readable data or programs or user data can be stored. The memory unit 22 typically comprises components that allow for both reading and writing (RAM) and memory whose content can only be read (ROM). The element further comprises an interface block 23 with an input unit 24 for inputting data for internal processing in the element, and an output unit 25 for outputting data from the internal processes of the element. Examples of said input unit comprise a plug-in unit acting as a gateway for information delivered to its external connection points. Examples of said output unit include a plug-in unit feeding information to the lines connected to its external connection points.

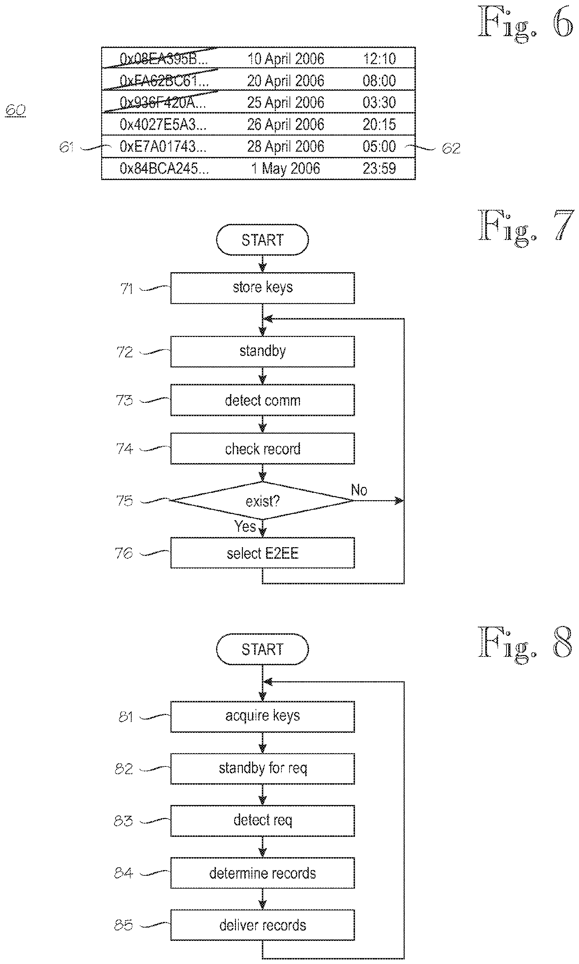

The processing unit 21, memory unit 22, and interface block 23 are electrically interconnected for systematically executing operations on the received and/or stored data according to the predefined, essentially programmed processes of a KMC element. These operations are described in more detail with Figure 8.

The block diagram in Figure 3 shows a reference hardware configuration of the mobile station (MS) 2 according to the present embodiment of the invention. The mobile station 2 comprises a user interface unit 31 with at least one input unit for inputting data by the user of the mobile station and at least one output unit for outputting data. Examples of said input units comprise a keypad, a touch screen, a microphone, or the like. Examples of said output units comprise a screen, a touch screen, a loudspeaker, or the like. The user interface is electrically connected to a processing unit 32 for systematically executing operations upon data. The processing unit 32 is a central element that essentially comprises an arithmetic logic unit, a number of special registers and control circuits. For example, the functions implemented by the processing unit 32 in transmission typically comprise: encoding, reordering, interleaving, scrambling, channel multiplexing, and burst building. The functions of the processing unit are at least partially controlled by a program code such that the mobile station implements procedures described later on in the description.

A memory unit 33 of the mobile station is a data medium where computer-readable data or programs, or user data can be stored, and it is connected to the processing unit 32. In a mobile station the memory unit 33 typically comprises components that allow for both reading and writing (RAM) and memory whose content can only be read (ROM).

A transceiver unit 34 comprising a transmitter 35 and a receiver 36 is electrically connected to the processing unit 32. The transmitter 35 receives a bitstream from the processing unit 32, and converts it to a radio signal for transmission by an antenna 37. Correspondingly, the radio signals received by the antenna 37 are led to the receiver 36, which converts the radio signal into a bitstream that is forwarded for further processing to the processing unit 32.

The embodied mobile station also comprises a security module 38. The security module 38 is a secure medium for storing and transporting information. In this embodiment, a detachable security model that may be removably inserted into the mobile station for subscriber identification and security-related information is applied. The detachable security module 38 is accessible to the processing unit 32 through an interface defined between the mobile station and the removable subscriber module. An example of the detachable subscriber module is a smart card used as a subscriber identity module of the mobile station. TETRA Security and Fraud Protection Group of TETRA Memorandum of Understanding Association has specified an interface between a smart card and TETRA terminals for the purposes of end-to-end encryption.

A detachable module is advantageous in that it allows adaptation of the mobile station to the user such that the rest of the mobile station equipment may be implemented without integrated subscriber-related identification and security-related information. This means that the rest of the mobile station configuration is easily adapted to personal use of different subscribers. However, detachability is not essential to the invention. The module may be implemented in other ways without deviating from the scope of protection. For example, the security module may correspond to a logical unit that comprises the functions for the operations of the security module described herein, and is implemented as an integrated part of the mobile station hardware and software.

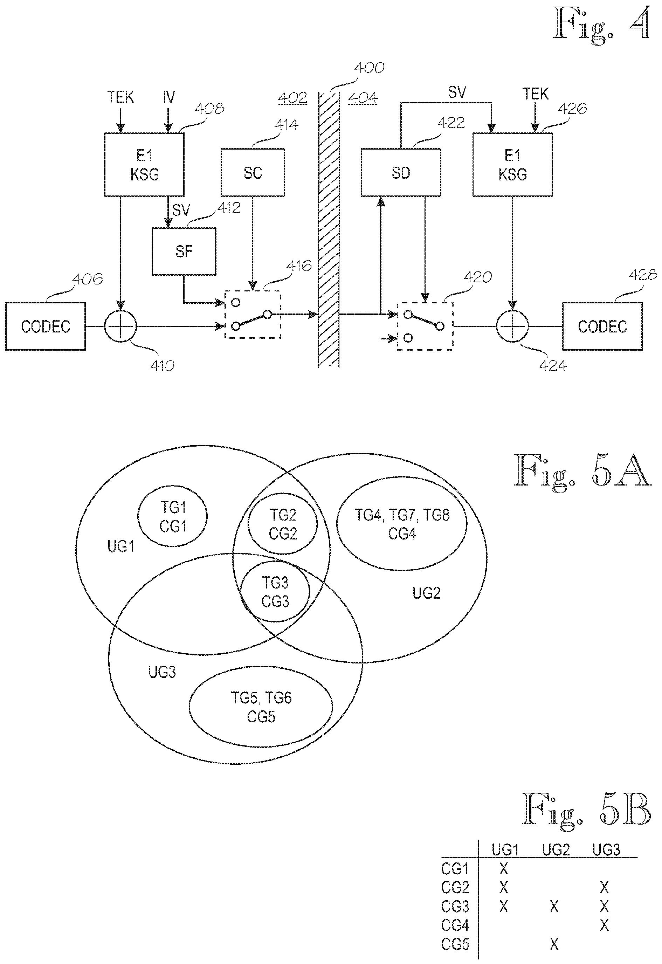

The processing unit 32, memory unit 33, user interface unit 32, transceiver unit 34 and security module 38 are electrically interconnected to provide means for systematically executing operations on the received and/or stored data according to the predefined, essentially programmed processes of the mobile station. In the embodied solutions according to the invention, the operations comprise functions for end-to-end encrypted communication with other terminals accessible via the TETRA system. These operations are described in more detail in Figures 4 to 7.

It should be noted that only elements necessary for disclosing the present embodiment are illustrated in Figures 2 and 3. For a person skilled in the art it is clear that a mobile station and switching and management infrastructure elements comprise a plurality of further elements and functionalities not explicitly illustrated herein. In addition, the blocks illustrate logical or functional units that may be implemented in or with one or more physical units, notwithstanding whether they are illustrated as one or more blocks in Figures 2 and 3. Furthermore, the mobile station represents a wide variety of different user terminals that may be fixed, portable, or mobile.

Security is a critical factor in many TETRA implementations, and therefore communication in a TETRA system needs to be protected in many ways. One of the ways to ensure confidentiality and integrity of the communications is encryption. Encryption relates to an information security mechanism that performs information transformation according to a cryptographic system. A cryptographic system typically comprises an algorithm and corresponding cryptographic keys.

Air interface encryption relates to a mechanism where data messages, signaling, and coded speech sent on the radio path are ciphered with an encryption key and algorithm. The air interface encryption protects the confidentiality of communication in the radio link effectively. End-to-end encryption relates to encryption within or at the source end system such that the corresponding decryption occurs only within or at the destination end system. It is to be noted that air interface encryption is typically separate from the end-to-end encryption service, and information that has already been encrypted by the end-to-end service may be, and typically is, re-encrypted with the air interface encryption function. In end-to-end encryption the user traffic may thus travel from the transmitting user terminal through a network in encrypted form until it reaches the receiving user terminal where it is decrypted.

Figure 4 illustrates an embodiment of an end-to-end encryption process applicable in the embodied TETRA system. The process involves a transmitting endpoint 402 and a receiving endpoint 404 and a system element 400 that delivers the information stream from the transmitting endpoint 402 to the receiving endpoint 404. From the point of view of the end-to-end encryption process, the system element 400 represents a mere pipeline through which the information is transparently delivered in substantially unmodified form between the endpoints. In the transmitting endpoint, a codec 406 represents functions that input to the process a data stream that corresponds to input data by the user or a terminal application. For example, in the case of voice input, the analog voice input through the user interface is converted into a digital signal that is fed from the codec to the process. The data stream is called a plain text data stream to denote that the semantic contents of the data stream are intelligible without use of end-to-end decryption alogorithms.

The function of a key stream generator (KSG) 408 is to provide a key stream segment that is used in the process to encrypt and decrypt that plain text data stream. In order to achieve this, KSG comprises an algorithm E1 that requires two inputs, a cipher key CK and an initialization value IV. The initialization value IV refers to a time variant parameter (e.g. a sequence number or a timestamp) that is used to initialize synchronization of the encryption units and thereby provides protection against replay. The cipher key CK refers to a secret shared by the transmitting and receiving endpoints, and it is typically implemented as a sequence of symbols that control the operation of encipherment and decipherment. A mutual agreement upon a common cipherkey CK to be used in a subsequent encipherment/decipherment process guarantees that the communication remains secure on its route through the system element 400. The first encryption function 410 combines the plain text data stream from step 406 with the key stream segment from step 408, resulting in an encrypted cipher text data stream.

To enable encryption KSG needs to be synchronized in the transmitting endpoint. For this purpose, a special synchronization vector SV is used. The transfer of synchronization data is achieved by stealing speech frames (half-slots) from the U-plane traffic. A frame constructor SF 412 creates a synchronization frames and feeds them to the second encryption function SC 416. At times controlled by the synchronization manager 414, the second encryption function 416 replaces half a slot of the encrypted cipher text data stream with the synchronization frame. The resulting end-to-end encoded (E2EE) data stream is delivered via the system element 400 to the receiving endpoint 404.

In the receiving endpoint 404, a first decryption function 420 checks whether there is a synchronization frame in the received E2EE data stream. If yes, the first decryption function 420 provides the detected synchronization frame to a synchronization detector SD 422. The synchronization vector SV received in the synchronization frame is loaded in KSG 426 and used with the cipherkey CK to provide a key stream segment that is input to the second decryption function 424. Also the received encrypted cipher text data stream is provided to the second decryption function 424, where the key stream segment from step 420 and the encrypted cipher text data stream are combined resulting in a decrypted bit stream. This bit stream is input to a codec 428. In the receiving endpoint, the codec 428 represents functions that input from the process a data stream that corresponds to a digital signal to be output to the user or a terminal application. For example, in the case of voice input, the decrypted data stream constitutes a digital signal that is fed to the codec to be converted into an analog voice output through the user interface.

For a person skilled in the art it is clear that in a communication endpoint, for example in a user or application terminal, a codec typically comprises functions of codecs 406, 428 of both of the terminating endpoints. Furthermore, a communication endpoint typically comprises functions of both the transmitting 402 and the receiving 404 endpoint.

As becomes evident from Figure 4, use of an end-to-end encryption algorithm requires knowledge on a shared secret, the cipherkey CK. In addition to this, the implementation of the end-to-end encryption typically requires some other keys, for example to support safe key management procedures. In the embodiment of Figure 3, these keys are stored in a smart card used as the security module of the mobile station.

In TETRA, there are at least two commonly used ways to load the keys into the secured database of the security module. In an out-of-band operation, the security module is electrically connected to a computer, for example a personal computer, and application software running in the security module and the computer loads the keys into the security module. The security of the arrangement is confirmed by the user of users performing the loading procedure. In order to further enhance the safety of the arrangement, the data streams between the computer application and the terminal application may be encrypted.

In over-the-air keying (OTAK) keys are loaded into the security module from a key management centre located in the network. Information from the key management centre is delivered to the mobile station using defined short message based OTAK messages. These messages are typically encrypted.

Accordingly, the keys applied in the present embodiment comprise key encrypting keys, traffic encryption keys, and signalling encryption keys. A user terminal may have a key encryption key (KEK) for protecting other encryption keys during their delivery and/or storage. For one user terminal there is typically only one KEK that is loaded into the security module using the out-of-band method. Another key applicable for protecting other keys is group encryption key (GEK). It may be loaded to the security module using OTAK, protected with the KEK of the security module. GEK is often used in preference to KEK in protecting the actual cipherkey, the traffic encryption key (TEK). The security module may comprise one or more TEKs that may be loaded into the security module using the out-of-band method or OTAK. Signalling encryption keys (SEK) are optional keys that may be used for protecting the OTAK messages. The security module typically holds only one SEK per cryptographic system. Sometimes TEK is used in SEK to protect both signalling and user data.

Due to the basic idea of shared secret, it is clear that both endpoints must utilize the same TEK in the end-to-end encrypted communication with each other. Use of static keys is not secure enough; they need to be changed dynamically such that the integrity of the communication can be maintained. Change of keys has been conventionally effected such that a group of TEKs has been stored in the security module. In OTAK, a message comprising a command to change to another key has been delivered with a defined OTAK message sequence. In the out-of-band method users have been contacted and required to activate new keys.

When dealing with one-to-one communication only, neither of these schemes is a problem, because two user terminals are easily managed. However, if end-to-end protected group communication needs to be supported, there are evident problems in implementing the change of keys. If OTAK is used, every member of the group has to be contacted before the change can be made. Especially with mobile user terminals all users of a group may not necessarily be accessible at the same time. For example, a user may be in another shift and have turned his mobile station off to be able to sleep. The mobile station may also be out of coverage or for some other reason operate in direct mode. Managing these kinds of delays may be very complicated, and involve a considerable amount of OTAK messages. Such complications may easily disrupt the communication or security of the whole group.

Similarly, out-of-band keying requires simultaneous operations from all users. For the same reasons as above, situations where all users of the group are reached and free to operate on their terminals are very rare. This complicates the decision on the time when the shift from one key to another is effected. Such difficulties pose a considerable risk to the use of end-to-end encryption in group communications.

The situation is further illustrated in Figures 5A and 5B. Figure 5A shows a number of talk groups TG1 to TG8. A talk group represents a group of one or more terminal users that may be involved in communication by using one common address, a group address. Each of the talk groups TG1 to TG8 is associated with one of the cryptographic groups CG1 to CG5. A cryptographic group refers to a set of key material that is used for communication in a talk group. In Figure 5A, talk groups are further shown divided into three user groups UG1, UG2, UG3. A user group relates to a set of users whose subscriptions and encryption keys are managed by one management entity.

Figure 5B shows a table illustrating division of the management of user groups (columns) and cryptographic groups (rows). It is clear that all members in a talk group need to apply the same cryptographic group during an end-to-end encrypted group call. One cryptographic group may be used by more than one talk groups and user groups.

In TETRA such a group address is GTSI (group TETRA subscriber identity), and the group call may be placed by selecting GTSI and pressing a PTT key of the user terminal. Figure 6 illustrates a record 60 stored in the security module of the mobile station embodied in Figure 3. The record 60 comprises a set of end-to-end encryption keys 61 applicable in a particular talk group G1. In order to ensure that all members of the group G1 are able to simultaneously apply the same E2EE key, the listed E2EE keys are associated with a timestamp 62. The timestamp 62 acts as an indication in a period during which the associated end-to-end encryption key is applicable in G1. In the example of Figure 6, the timestamp denotes specifically the expiry time of the associated E2EE key. Other methods of denoting time periods, and indication types may be applied without deviating from the scope of protection. Similar records may be stored in the mobile station for other talk groups G2, G3, etc.

It should also be noted that even if the advantages of the invented arrangement are most evident with group communication, the solution is not limited to group communication, but is also directly applicable to individual communication. In the case of the present embodiment, one or more of the stored E2EE keysets may be applicable to individual calls between the storing user terminal and another user terminal. These are considered to form a communication group of two user terminals.

Figure 7 illustrates an exemplary procedure for implementing end-to-end encryption in the context of the embodied mobile station of Figure 3. The procedure begins by the mobile station receiving (70) a set of keys applicable to end-to-end encrypted communication. Reception may take place using OTAK or an out-of-band operation, as discussed above. In OTAK the mobile station forwards the keys received in the OTAK message to the security module via the defined interface. In out-of-band operations, the security module may be directly connected with the computer, or the connection may be established to the mobile station and the applications in the computer and the security module then communicate over a defined application programming interface of the mobile station. The keys are associated with an indication that indicates a cryptographic group in which the key is to be applied, and a period during which the key is applicable in that particular group. The embodied mobile station stores (step 71) the received keys in the security module and becomes standby (step 72) for a new initiation of communication. When the mobile station detects (step 73) an initiation of communication, it checks (step 74) whether a valid record exists for the cryptographic group of the communication. A cryptographic group may be another subscriber to individual communication or a talk group for group communication. The validity of the record is checked on the basis of timestamps associated with the stored keys. If no valid records exist (step 75), the procedure returns back to step 72. If a valid record is found (step 75), the mobile station selects (step 76) the E2EE key stored in the record into use and returns to step 72.

Figure 8 illustrates an exemplary procedure for implementing end-to-end encryption in the context of the embodied KMC element of Figure 4. The procedure begins by KMC acquiring (step 81) a set of keys applicable as E2EE keys in defined cryptographic groups. The keys may be generated in KMC using an appropriate random number generation application, or downloaded from another key generation source, and assigned to the defined cryptographic groups. According to the invention, these keys are associated with a timestamp that indicates the period of validity for the key. After the first time, the acquiring process may be continuous such that it takes place in the background during other procedures of KMC such that there are always keys available for a defined period in the future. KMC becomes standby (step 82) for a request of key delivery. When the request is detected (step 83), KMC determines (step 84) a set of one or more records and delivers (step 85) them to a user terminal. The determination is an adjustable function according to the application. For example, in the out-of-band operation, KMC may determine the cryptographic groups the user terminal is allowed to access, or may become allowed to access, and uploads a set of cryptographic keys applicable in those cryptographic groups to the user terminal. In OTAK, similar big downloads are possible, but typically smaller and more targeted requests that relate to one or more cryptographic groups are preferred. After this, KMC moves back to step 81.

It should be noted that the above embodiments are described using a mobile station as an example of user terminals, but the invention is not limited to mobile stations only. Any type of terminals capable of sinking U-plane traffic may be considered as user terminals, including dispatcher workstations and application servers connected to the communication system. Additionally, the above embodiments apply symmetric encryption where communicating parties utilize knowledge of secret information that is shared with the communicating parties but is not available or derivable without a significant effort to any further party. It should be noted that also asymmetric authentication, where pairs of public-private keys are used to encrypt and decrypt data, may be applied without deviating from the scope of protection.

It will be obvious to a person skilled in the art that, as the technology advances, the inventive concept can be implemented in various ways. The invention and its embodiments are not limited to the examples described above but may vary within the scope of the claims.

## Claims

1. A method for end-to-end encrypted communication, comprising:
storing (71) into a user terminal (2) a set (60) of keys (61) applicable in end-to-end encryption of communications, one or more keys being associated with a validity indication (62) that indicates a cryptographic group (CG1...CG5) of two or more user terminals in which the key is to be applied, and a period during which the key is applicable in that particular cryptographic group;
at the user terminal connecting to a communication of the cryptographic group, selecting the key to be applied from the stored set of keys on the basis of the present cryptographic group and the present time according to the associated validity indications.

2. A method according to claim 1, **characterized by** loading the set of keys and the validity indications as a set of successive records associated with one cryptographic group, a record comprising a field for an end-to-end encryption key and a field for an associated timestamp.

3. A method according to claim 2, **characterized by** selecting the key to be applied in the cryptographic group from the record such that the timestamp of the record is earlier than the present time, and the timestamp of the subsequent record is later than the present time.

4. A key management element (9) comprising:
a communication interface unit (23) for exchanging information with a user terminal;
a control unit, the functions of the control unit being at least partially controlled by a program code, said program code configuring said key management element to send to a user terminal a set of keys applicable in end-to-end encryption of communications of a cryptographic group of at least two user groups, a user group relating to a set of users whose subscriptions and encryption keys are managed by one management entity, one or more keys being associated with a validity indication that indicates the cryptographic group of two or more user groups in which the key is to be applied, and a period during which the key is applicable in that particular cryptographic group.

5. A user terminal (2) for a communication network, comprising:
a communication interface unit (34) for exchanging information over the communication network;
a memory unit (33);
a control unit (32), the functions of the control unit being at least partially controlled by a program code, said program code configuring said user terminal to
store in the memory unit a set of keys applicable in end-to-end encryption of communications, one or more keys being associated with a validity indication that indicates a cryptographic group of two or more user terminals in which the key is to be applied, and a period during which the key is applicable in that particular cryptographic group;
select, when connecting to a communication of the cryptographic group, the key to be applied from the stored set of keys on the basis of the present cryptographic group and the present time according to the associated validity indications.

6. A user terminal according to claim 5, **characterized by** means for receiving the set of keys over the air interface.

7. A user terminal according to claim 6, **characterized by** means for loading the set of keys into the user terminal in a short message.

8. A user terminal according to claim 7, **characterized by** means for loading the set of keys into the user terminal from a computer connected locally to the user terminal.

9. A user terminal according to claim 8, **characterized by** means for loading the set of keys into the user terminal using procedures of a computer application installed in the user terminal and the computer.

10. A user terminal according to any of claims 5 to 9, **characterized by** means for loading the set of keys and the validity indications as a set of successive records associated with one group, a record comprising a field for an end-to-end encryption key and a field for an associated timestamp.

11. A user terminal according to claim 10, **characterized by** means for selecting the key to be applied in the cryptographic group from the record such that the timestamp of the record is earlier than the present time, and the timestamp of the subsequent record is later than the present time.

12. A user terminal according to any of the preceding claims 5 to 11, **characterized in that** the present cryptographic group corresponds to a group of two user terminals and the communication corresponds to individual communication.

13. A user terminal according to any of the preceding claims 5 to 12, **characterized by** comprising a security module, and means for storing the set of keys in the security module.

14. A communications system comprising a key management element (9) according to claim 4 and one or more user terminals (2) according to claim 5.

15. A computer program product encoding a computer process of instructions for executing a computer process for managing a request on a communication resource for a user terminal, the process comprising:
storing in a user terminal a set of keys applicable in end-to-end encryption of communications, one or more keys being associated with a validity indication that indicates a cryptographic group of two or more user terminals in which the key is to be applied, and a period during which the key is applicable in that particular group;
at the user terminal connecting to a communication of the cryptographic group, selecting the key to be applied from the stored set of keys on the basis of the present cryptographic group and the present time according to the associated validity indications.

## Patentansprüche

1. Verfahren für eine Ende-zu-Ende-verschlüsselte Kommunikation, umfassend:
Speichern (71) eines Satzes (60) Schlüssel (61), die für die Ende-zu-Ende-Verschlüsselung von Kommunikationen anwendbar sind, in einem Anwenderendgerät (2), wobei ein oder mehrere Schlüssel mit einer Gültigkeitsangabe (62) verknüpft sind, die eine Verschlüsselungsgruppe (CG1 ... CG5) mit zwei oder mehr Anwenderendgeräten, in denen der Schlüssel angewendet werden soll, sowie einen Zeitraum angibt, in dem der Schlüssel in dieser bestimmten Verschlüsselungsgruppe anwendbar ist;
Verbinden mit einer Kommunikation der Verschlüsselungsgruppe im Anwenderendgerät, wobei der anzuwendende Schlüssel aus dem gespeicherten Satz Schlüssel auf der Grundlage der aktuellen Verschlüsselungsgruppe und dem aktuellen Zeitpunkt in Übereinstimmung mit den verknüpften Gültigkeitsangaben gewählt wird.

2. Verfahren nach Anspruch 1, **gekennzeichnet durch** das Laden des Satzes Schlüssel und der Gültigkeitsangaben als einen Satz aufeinanderfolgender Einträge, die mit einer Verschlüsselungsgruppe verknüpft sind, wobei ein Eintrag ein Feld für einen Ende-zu-Ende-Verschlüsselungsschlüssel und ein Feld für einen verknüpften Zeitstempel umfasst.

3. Verfahren nach Anspruch 2, **gekennzeichnet durch** das Wählen des in der Verschlüsselungsgruppe anzuwendenden Schlüssels aus dem Eintrag, sodass der Zeitstempel des Eintrags vor dem aktuellen Zeitpunkt liegt und der Zeitstempel des nachfolgenden Eintrags nach dem aktuellen Zeitpunkt liegt.

4. Schlüsselverwaltungselement (9), umfassend
eine Kommunikationsschnittstelleneinheit (23) zum Austausch von Daten mit einem Anwenderendgerät;
eine Steuereinheit, wobei die Funktionen der Steuereinheit mindestens teilweise von einem Programmiercode gesteuert werden, wobei der Programmiercode das Schlüsselverwaltungselement dazu konfiguriert, einen Satz Schlüssel an ein Anwenderendgerät zu senden, die für eine Ende-zu-Ende-Verschlüsselung der Kommunikation einer Verschlüsselungsgruppe mit mindestens zwei Anwendergruppen anwendbar sind, wobei eine Anwendergruppe einen Satz Anwender betrifft, deren Abonnements und Verschlüsselungsschlüssel von einer Verwaltungseinheit verwaltet werden, wobei ein oder mehrere Schlüssel mit einer Gültigkeitsangabe verknüpft sind, die die Verschlüsselungsgruppe mit zwei oder mehr Anwendergruppen, in denen der Schlüssel angewendet werden soll, sowie einen Zeitraum angibt, in dem der Schlüssel in dieser bestimmten Verschlüsselungsgruppe anwendbar ist.

5. Anwenderendgerät (2) für ein Kommunikationsnetzwerk, umfassend:
eine Kommunikationsschnittstelleneinheit (34) zum Austausch von Daten über das Kommunikationsnetzwerk;
eine Speichereinheit (33);
eine Steuereinheit (32),
wobei die Funktionen der Steuereinheit mindestens teilweise von einem Programmiercode gesteuert werden, wobei der Programmiercode das Anwenderendgerät konfiguriert,
einen Satz Schlüssel, die für die Ende-zu-Ende-Verschlüsselung von Kommunikationen anwendbar sind, in einem Anwenderendgerät zu speichern,
wobei ein oder mehrere Schlüssel mit einer Gültigkeitsangabe verknüpft sind, die eine Verschlüsselungsgruppe mit zwei oder mehr Anwenderendgeräten, in denen der Schlüssel angewendet werden soll, sowie einen Zeitraum angibt, in dem der Schlüssel in dieser bestimmten Verschlüsselungsgruppe anwendbar ist;
beim Verbinden mit einer Kommunikation der Verschlüsselungsgruppe den anzuwendenden Schlüssel aus dem gespeicherten Satz Schlüssel auf der Grundlage der aktuellen Verschlüsselungsgruppe und dem aktuellen Zeitpunkt in Übereinstimmung mit den verknüpften Gültigkeitsangaben zu wählen.

6. Anwenderendgerät nach Anspruch 5, **gekennzeichnet durch** Mittel zum Empfangen des Satzes Schlüssel über die Luftschnittstelle.

7. Anwenderendgerät nach Anspruch 6, **gekennzeichnet durch** Mittel zum Laden des Satzes Schlüssel in einer Kurznachricht in das Anwenderendgerät.

8. Anwenderendgerät nach Anspruch 7, **gekennzeichnet durch** Mittel zum Laden des Satzes Schlüssel von einem lokal mit dem Anwenderendgerät verbundenen Computer in das Anwenderendgerät.

9. Anwenderendgerät nach Anspruch 8, **gekennzeichnet durch** Mittel zum Laden des Satzes Schlüssel mittels Verfahren einer auf dem Anwenderendgerät installierten Computerapplikation in das Anwenderendgerät.

10. Anwenderendgerät nach einem der Ansprüche 5 bis 9, **gekennzeichnet durch** Mittel zum Laden des Satzes Schlüssel und der Gültigkeitsangaben als einen Satz aufeinanderfolgender Einträge, die mit einer Gruppe verknüpft sind, wobei ein Eintrag ein Feld für einen Ende-zu-Ende-Verschlüsselungsschlüssel und ein Feld für einen verknüpften Zeitstempel umfasst.

11. Anwenderendgerät nach Anspruch 10, **gekennzeichnet durch** Mittel zum Wählen des in der Verschlüsselungsgruppe anzuwendenden Schlüssels aus dem Eintrag, sodass der Zeitstempel des Eintrags vor dem aktuellen Zeitpunkt liegt und der Zeitstempel des nachfolgenden Eintrags nach dem aktuellen Zeitpunkt liegt.

12. Anwenderendgerät nach einem der vorhergehenden Ansprüche 5 bis 11, **dadurch gekennzeichnet, dass** die aktuelle Verschlüsselungsgruppe einer Gruppe von zwei Anwendergeräten entspricht und die Kommunikation einer individuellen Kommunikation entspricht.

13. Anwenderendgerät nach einem der vorhergehenden Ansprüche 5 bis 12, **dadurch gekennzeichnet, dass** es ein Sicherheitsmodul umfasst sowie Mittel zum Speichern des Satzes Schlüssel in dem Sicherheitsmodul.

14. Kommunikationssystem, umfassend ein Schlüsselverwaltungselement (9) nach Anspruch 4 und ein oder mehrere Anwenderendgeräte (2) nach Anspruch 5.

15. Computerprogrammprodukt, das einen Computerprozess mit Anweisungen zum Ausführen eines Computerprozesses zum Verwalten einer Anforderung einer Kommunikationsressource für ein Anwenderendgerät codiert, wobei der Prozess umfasst:
Speichern eines Satzes Schlüssel, die für die Ende-zu-Ende-Verschlüsselung von Kommunikationen anwendbar sind, in einem Anwenderendgerät, wobei ein oder mehrere Schlüssel mit einer Gültigkeitsangabe verknüpft sind, die eine Verschlüsselungsgruppe mit zwei oder mehr Anwenderendgeräten, in denen der Schlüssel angewendet werden soll, sowie einen Zeitraum angibt, in dem der Schlüssel in dieser bestimmten Gruppe anwendbar ist;
Verbinden mit einer Kommunikation der Verschlüsselungsgruppe im Anwenderendgerät, wobei der anzuwendende Schlüssel aus dem gespeicherten Satz Schlüssel auf der Grundlage der aktuellen Verschlüsselungsgruppe und dem aktuellen Zeitpunkt in Übereinstimmung mit den verknüpften Gültigkeitsangaben gewählt wird.

## Revendications

1. Procédé pour une communication chiffrée de bout en bout, comprenant:
le stockage (71) dans un terminal utilisateur (2) d'un ensemble (60) de clefs (61) applicable dans un chiffrage de communications de bout en bout, une ou plusieurs clefs étant associées à une indication de validité (62) qui indique un groupe cryptographique (CG1... CG5) de deux ou plusieurs terminaux utilisateur dans lesquels la clef doit être appliquée, et une période pendant laquelle la clef est applicable dans ce groupe cryptographique particulier ;
au niveau du terminal utilisateur, la connexion à une communication du groupe cryptographique, la sélection de la clef à appliquer à partir de l'ensemble stocké de clefs sur la base du groupe cryptographique présent et de l'instant présent selon les indications de validité associées.

2. Procédé selon la revendication 1, **caractérisé par** le chargement de l'ensemble de clefs et des indications de validité comme un ensemble d'enregistrements successifs associés à un groupe cryptographique particulier, un enregistrement comprenant un champ pour une clef de chiffrage de bout en bout et un champ pour un horodatage associé.

3. Procédé selon la revendication 2, **caractérisé par** la sélection de la clef à appliquer dans le groupe cryptographique à partir de l'enregistrement de sorte que l'horodatage de l'enregistrement est plus précoce que l'instant présent, et l'horodatage de l'enregistrement suivant est postérieur à l'instant présent.

4. Élément de gestion de clef (9) comprenant :
une unité d'interface de communication (23) pour échanger des informations avec un terminal utilisateur ;
une unité de commande, les fonctions de l'unité de commande étant au moins partiellement commandées par un code de programme, ledit code de programme configurant ledit élément de gestion de clef pour envoyer à un terminal utilisateur un ensemble de clefs applicables à un chiffrage de communications de bout en bout d'un groupe cryptographique d'au moins deux groupes utilisateur, un groupe utilisateur se rapportant à un ensemble d'utilisateurs dont les abonnements et les clefs de chiffrage sont gérés par une entité de gestion particulière, une ou plusieurs clefs étant associées à une indication de validité qui indique le groupe cryptographique de deux ou plusieurs groupes utilisateur dans lesquels la clef doit être appliquée, et une période pendant laquelle la clef est applicable dans ce groupe cryptographique particulier.

5. Terminal utilisateur (2) pour un réseau de communication, comprenant :
une unité d'interface de communication (34) pour échanger des informations sur le réseau de communication ;
une unité de mémoire (33) ;
une unité de commande (32) ;
les fonctions de l'unité de commande étant au moins partiellement commandées par un code de programme, ledit code de programme configurant ledit terminal utilisateur pour
stocker dans l'unité de mémoire un ensemble de clefs applicables dans le chiffrage de communications de bout en bout, une ou plusieurs clefs étant associées à une indication de validité qui indique un groupe cryptographique de deux ou plusieurs terminaux utilisateur dans lesquels la clef doit être appliquée, et une période pendant laquelle la clef est applicable dans ce groupe cryptographique particulier ;
sélectionner, lors de la connexion à une communication du groupe cryptographique, la clef à appliquer à partir de l'ensemble stocké de clefs sur la base du groupe cryptographique présent et de l'instant présent selon les indications de validité associées.

6. Terminal utilisateur selon la revendication 5, **caractérisé par** un moyen pour recevoir l'ensemble de clefs sur l'interface hertzienne.

7. Terminal utilisateur selon la revendication 6, **caractérisé par** un moyen pour charger l'ensemble de clefs dans le terminal utilisateur dans un message court.

8. Terminal utilisateur selon la revendication 7, **caractérisé par** un moyen pour charger l'ensemble de clefs dans le terminal utilisateur à partir d'un ordinateur connecté localement au terminal utilisateur.

9. Terminal utilisateur selon la revendication 8, **caractérisé par** un moyen pour charger l'ensemble de clefs dans le terminal utilisateur en utilisant des procédures d'une application informatique installée dans le terminal utilisateur et l'ordinateur.

10. Terminal utilisateur selon l'une quelconque des revendications 5 à 9, **caractérisé par** un moyen pour charger l'ensemble de clefs et les indications de validité comme un ensemble d'enregistrements successifs associés à un groupe particulier, un enregistrement comprenant un champ pour une clef de chiffrage de bout en bout et un champ pour un horodatage associé.

11. Terminal utilisateur selon la revendication 10, **caractérisé par** un moyen pour sélectionner la clef à appliquer dans le groupe cryptographique à partir de l'enregistrement de sorte que l'horodatage de l'enregistrement est plus précoce que l'instant présent, et l'horodatage de l'enregistrement suivant est postérieur à l'instant présent.

12. Terminal utilisateur selon l'une quelconque des revendications 5 à 11, **caractérisé en ce que** le groupe cryptographique présent correspond à un groupe de deux terminaux utilisateur et la communication correspond à une communication individuelle.

13. Terminal utilisateur selon l'une quelconque des revendications 5 à 12, **caractérisé en ce qu'**il comprend un module de sécurité, et un moyen pour stocker l'ensemble de clefs dans le module de sécurité.

14. Système de communications comprenant un élément de gestion de clef (9) selon la revendication 4 et un ou plusieurs terminaux utilisateur (2) selon la revendication 5.

15. Produit formant programme informatique codant un processus informatique d'instructions pour exécuter un processus informatique pour gérer une demande sur une ressource de communication pour un terminal utilisateur, le processus comprenant :
le stockage dans un terminal utilisateur d'un ensemble de clefs applicables dans le chiffrage de communications de bout en bout, d'une ou plusieurs clefs associées à une indication de validité qui indique un groupe cryptographique de deux ou plusieurs terminaux utilisateur dans lesquels la clef doit être appliquée, et une période pendant laquelle la clef est applicable dans ce groupe particulier ;
au niveau du terminal utilisateur, la connexion à une communication du groupe cryptographique, la sélection de la clef à appliquer à partir de l'ensemble stocké de clefs sur la base du groupe cryptographique présent et de l'instant présent selon les indications de validité associées.
